# EUROPÄISCHE PATENTANMELDUNG

(11) **EP 2 523 080 A1**
(43) Veröffentlichungstag der Anmeldung: **14.11.2012**
(21) Anmeldenummer: 12164552.7
(22) Anmeldetag: 18.04.2012
(51) Int. Cl.: G06F 3/044, G06K 7/08

(54) **System zum Lokalisieren und Identifizieren von wenigstens zwei separaten Gegenständen**

(30) Priorität: 11.05.2011 DE 102011101237
(71) Anmelder: Heidelberger Druckmaschinen AG, 69115 Heidelberg (DE)
(72) Erfinder: Fergen Dr., Immanuel, 76229 Karlsruhe (DE); Schmitt-Lewen Dr., Martin, 69118 Heidelberg (DE); Wagner, Christian, 76709 Kronau (DE)

(57) **Zusammenfassung**

Ein erfindungsgemäßes System zum Lokalisieren und Identifizieren von wenigstens zwei separaten Gegenständen, z.B. Verpackungen, umfasst Folgendes: wenigstens ein - einen ersten Mess-Bereich (6.4, 6.4a) erfassenden - kapazitiver erster Sensor (6.2, 6.2a) an einer ersten Position (6.1, 6.1a) einer Sensoreinrichtung (2), z.B. einer Sensor-Folie auf einem Regalboden für die Verpackungen, wenigstens ein - einen zweiten Mess-Bereich (7.4, 6.4b) erfassenden - kapazitiver zweiter Sensor (7.2, 6.2b) an einer von der ersten verschiedenen zweiten Position (7.1, 6.1b) der Sensoreinrichtung (2), wenigstens eine elektrisch leitfähige erste Markierung (8.2) eines ersten Gegenstands (8.1) im Mess-Bereich des einen Sensors, wenigstens eine elektrisch leitfähige zweite Markierung (9.2) eines zweiten Gegenstands (9.1) im Mess-Bereich des anderen Sensors, und eine Auswerte-Einrichtung (3) zum Auswerten von - durch die elektrische Leitfähigkeit der Markierungen der Gegenstände verursachte oder veränderte - Signalen der Sensoren. Die Erfindung erlaubt es, Gegenstände kapazitiv zu erfassen und die gewonnenen Informationen z.B. bei der Verbesserung der Lagerhaltung zu verwenden. Sowohl die Sensoren als auch die Markierungen können schnell und kostengünstig durch Druckprozesse oder Folienübertragung erzeugt sein.

## Beschreibung

Die vorliegende Erfindung betrifft ein System zum Lokalisieren und Identifizieren von wenigstens zwei separaten Gegenständen mit den Merkmalen des Oberbegriffs von Anspruch 1.

Aus dem **Stand der Technik** sind bereits zweidimensionale Sensoranordnungen bekannt, die auf kapazitiven Sensoren aufbauen und zur Bestimmung der Position eines Gegenstandes, z.B. eines Fingers auf einem berührungsempfindlichen Monitor, eingesetzt werden.

Die US 2009/0045823 A1 offenbart bereits ein so genanntes Printed Circuit Board (PCB), welches als kapazitives Sensorfeld für Eingabegeräte wie z.B. so genannte Touch Screens verwendet werden kann. Das System nutzt die elektrische Leitfähigkeit der menschlichen Haut, d.h. es braucht keine besonderen Vorkehrungen, um Finger für die Eingabe nutzen zu können. Eine Identifikation der Finger ist nicht vorgesehen.

Die WO 2009/023888 A2 offenbart eine drucksensitive Koordinateneinrichtung, wobei durch die Position und Intensität einer Krafteinwirkung auf einen Polymerschaum der Einrichtung eine messbare und erfassbare Änderung der Kapazität von Elektroden einer Elektrodenanordnung erzeugt wird. Eine ähnliche Vorrichtung ist in der AT 504 406 B1 oder der AT 504 959 B1 offenbart. Das System benötigt Druckausübung und Verformung, um Messergebnisse zu erzielen.

In der Lagerhaltung ist es des Weiteren bekannt, Sensoren auf oder an Regalen vorzusehen.

Die DE 34 12 687 C2 offenbart z.B. kapazitive Sensoren, welche über gedruckte Leiterbahnen ausgelesen werden und welche durch Antippen mit dem Finger aktiviert werden. Durch das Antippen werden dem Benutzer Informationen über die Ware übermittelt.

Die WO 96/31833 A1 offenbart einen Regalboden mit druckempfindlichen, kapazitiven Sensoren, der es erlaubt, die Anwesenheit und die Menge von Gegenständen zu bestimmen. Es ist nicht vorgesehen, die Gegenstände zu identifizieren.

Die WO 2006/055667A2 offenbart ein System, mit dem es ermöglicht wird, die An- oder Abwesenheit eines Gegenstades in einem Regal zu ermitteln. Dabei wird der Druck des Gegenstandes auf dessen Unterlage mittels eines Sensors gemessen und das Ergebnis mittels eines so genannten RFID-Tags vom Sensor an eine das Ergebnis weiterverarbeitende, entfernte Stelle übermittelt. Es ist nicht vorgesehen, die Gegenstände zu identifizieren.

Ferner sind kapazitiv arbeitende Karten und Kartenleser bekannt. Jeweils eine gedruckte Karte mit elektrisch leitenden Flächen wird in den Kartenleser geschoben und dieser identifiziert über die Verteilung der Flächen auf der Karte deren Identität. Eine Messung der Position der Karte ist nicht vorgesehen. Auch eine gleichzeitige Verarbeitung mehrerer Karten ist nicht vorgesehen. Diese Technologie ist in den folgenden Dokumenten beschrieben: DE 20 2008 015 342 U1**,** DE 20 2008 016 187 U1**,** DE 10 2007 029 384 A1**,** DE 20 2007 013 361 U1**.**

Vor diesem Hintergrund ist es Aufgabe der vorliegenden Erfindung, ein gegenüber dem Stand der Technik verbessertes System zu schaffen, welches sowohl die Bestimmung der Position als auch der Identität von mehr als einem Gegenstand erlaubt und ohne aufwendige, kostenintensive, druckempfindliche Sensoren oder RFID-Tags auskommt, insbesondere ein System zu schaffen, dessen Komponenten gedruckt oder durch Folienübertrag erzeugt sind und als so genannte "Wegwerfartikel" anzusehen sind.

Diese **Aufgabe** wird erfindungsgemäß durch ein System mit den Merkmalen von Anspruch 1 gelöst. Vorteilhafte Weiterbildungen der Erfindung ergeben sich aus den zugehörigen Unteransprüchen sowie aus der Beschreibung und den zugehörigen Zeichnungen.

Ein **erfindungsgemäßes System** zum Lokalisieren und Identifizieren von wenigstens zwei separaten Gegenständen, umfasst Folgendes: wenigstens ein - einen ersten Mess-Bereich erfassenden - kapazitiver erster Sensor an einer ersten Position einer Sensoreinrichtung, wenigstens ein - einen zweiten Mess-Bereich erfassenden - kapazitiver zweiter Sensor an einer von der ersten verschiedenen zweiten Position der Sensoreinrichtung, wenigstens eine elektrisch leitfähige erste Markierung eines ersten Gegenstands im Mess-Bereich des einen Sensors, wenigstens eine elektrisch leitfähige zweite Markierung eines zweiten Gegenstands im Mess-Bereich des anderen Sensors, und eine Auswerte-Einrichtung zum Auswerten von - durch die elektrische Leitfähigkeit der Markierungen der Gegenstände verursachte oder veränderte - Signalen der Sensoren.

Das erfindungsgemäße System erlaubt in vorteilhafter Weise die Bestimmung der Position als auch der Identität von mehr als einem Gegenstand ohne aufwendige, kostenintensive, druckempfindliche Sensoren oder RFID-Tags. Stattdessen werden erfindungsgemäß kostengünstige und einfach herzustellende, kapazitive, d.h. Kapazitätsänderungen erfassende Sensoren eingesetzt. Wie weiter unten ausführlich dargestellt, können solche Sensoren und auf ihnen aufbauende Sensorfelder ebenso wie die für das System erforderlichen Markeirungen schnell und preiswert mittels Druckverfahren oder Folientransferverfahren erzeugt werden. Somit ist es möglich, beide notwendigen Komponenten des Systems (Sensoren und Markierungen) mittels desselben Herstellverfahrens und bevorzugt am selben Produktionsort und mit denselben Produktionsmaschinen herzustellen. Wenn es sich bei den Gegenständen z.B. um Verpackungen handelt, so kann eine auf die Verpackungen abgestimmte, mit denselben Maschinen und unter Verwendung derselben Materialien hergestellte Sensoreinrichtung den Verpackungen in deren Umverpackung beigefügt werden.

Eine bevorzugte Weiterbildung des erfindungsgemäßen Systems kann sich dadurch auszeichnen, dass der erste Sensor und der zweite Sensor als elektrisch leitende Flächen ausgebildet sind. Eine ebenfalls bevorzugte Weiterbildung des erfindungsgemäßen Systems kann sich dadurch auszeichnen, dass die erste Markierung und die zweite Markierung als elektrisch leitende Flächen ausgebildet sind.

Eine für das Erfassen von frei positionierbaren Gegenständen vorteilhafte und daher bevorzugte Weiterbildung des erfindungsgemäßen Systems kann sich dadurch auszeichnen, dass die Sensoreinrichtung eine zweidimensionale Anordnung von Sensoren umfasst. Die Anordnung kann n mal m Sensoren umfassen, wobei n, m ganzzahlig und größer oder gleich 2.

Eine hinsichtlich der kostengünstigen Herstellung vorteilhafte und daher bevorzugte Weiterbildung des erfindungsgemäßen Systems kann sich dadurch auszeichnen, dass die Markierungen verdruckbares, elektrisch leitfähiges Material umfassen. Eine ebenfalls hinsichtlich der kostengünstigen Herstellung vorteilhafte und daher bevorzugte Weiterbildung des erfindungsgemäßen Systems kann sich dadurch auszeichnen, dass die Sensoreinrichtung eine elektrisch nicht leitende Folie aufweist und dass die Flächen auf die Folie aufgedruckt oder durch Folienübertrag erzeugt sind. Eine weiter hinsichtlich der kostengünstigen Herstellung vorteilhafte und daher bevorzugte Weiterbildung des erfindungsgemäßen Systems kann sich dadurch auszeichnen, dass die Flächen verdruckbares, elektrisch leitfähiges Material umfassen.

Eine für die Anwendung in der Lagerhaltung vorteilhafte und daher bevorzugte Weiterbildung des erfindungsgemäßen Systems kann sich dadurch auszeichnen, dass die Gegenstände im Wesentlichen ebene Böden aus Karton oder Pappe aufweisen und dass die Markierungen auf den Böden aufgedruckt oder durch Folienübertrag erzeugt sind. Eine ebenfalls für die Anwendung in der Lagerhaltung vorteilhafte und daher bevorzugte Weiterbildung des erfindungsgemäßen Systems kann sich dadurch auszeichnen, dass das System ein Regal für die Gegenstände mit wenigstens zwei übereinander angeordneten Böden aufweist, wobei jeder Boden mit einer jeweiligen Sensoreinrichtung versehen ist. Eine weitere für die Anwendung in der Lagerhaltung vorteilhafte und daher bevorzugte Weiterbildung des erfindungsgemäßen Systems kann sich dadurch auszeichnen, dass das System eine Vielzahl solcher Regale aufweist und dass die Auswerte-Einrichtung Gegenstände auf wenigstens zwei Böden verschiedener Regale im Wesentlichen gleichzeitig lokalisiert und identifiziert.

Die beschriebene Erfindung und die beschriebenen, vorteilhaften Weiterbildungen der Erfindung stellen auch in Kombination miteinander vorteilhafte Weiterbildungen der Erfindung dar.

Erfindungsgemäß wird auch folgendes Verfahren vorgeschlagen: Drucken eines ersten Produkts mit einer elektrisch leitenden, ersten Struktur und eines zweiten Produkts mit einer an die erste Struktur angepassten, elektrisch leitenden, zweiten Struktur, wobei die beiden Strukturen in ihrer räumlichen und kapazitiven Beschaffenheit so ausgelegt sind, dass ein charakteristisches Signal erzeugt wird, wenn die beiden Produkte in Nähe zueinander angeordnet werden.

Weiterhin wird erfindungsgemäß auch folgendes Verfahren vorgeschlagen: Detektionsverfahren, bei welchem ein erstes gedrucktes Produkt mit einer elektrisch leitenden, ersten Struktur und ein zweites gedrucktes Produkt mit einer an die erste Struktur angepassten, elektrisch leitenden, zweiten gedruckten Struktur in Nähe zueinander gebracht werden, wobei die relative Lage der beiden Strukturen zueinander ein charakteristisches Detektionssignal bewirkt.

Mit Blick auf die beiden vorgenannten Verfahren, umfasst der Begriff "Nähe" insbesondere einen Abstand der Produkte im Bereich des so genannten Nahfelds, bevorzugt von weniger als etwa 1 Zentimeter, bevorzugt von weniger als etwa 1 Millimeter und besonders bevorzugt den direkten Kontakt. Der Begriff "charakteristisches (Detektions-) Signal" umfasst ein Signal, das es erlaubt, wenigstens eines der beiden Produkt zu identifizieren.

Die Erfindung als solche sowie konstruktiv und/oder funktionell vorteilhafte Weiterbildungen der Erfindung werden nachfolgend unter Bezug auf die zugehörigen Zeichnungen anhand wenigstens eines bevorzugten Ausführungsbeispiels näher beschrieben. In den Zeichnungen sind einander entsprechende Elemente mit jeweils denselben Bezugszeichen versehen.

Die **Zeichnungen** zeigen:
- Fig. 1 eines: eine schematische Darstellung eines bevorzugten Ausführungsbeispiels erfindungsgemäßen Systems;
- Fig. 2: eine schematische Darstellung eines weiteren bevorzugten Ausführungsbeispiels eines erfindungsgemäßen Systems;
- Fig. 3: eine schematische Darstellung eines weiteren bevorzugten Ausführungsbeispiels eines erfindungsgemäßen Systems;
- Fig. 4: eine schematische Darstellung eines weiteren bevorzugten Ausführungsbeispiels eines erfindungsgemäßen Systems;
- Fig. 5: eine schematische Darstellung eines weiteren bevorzugten Ausführungsbeispiels eines erfindungsgemäßen Systems;
- Fig. 6: eine schematische Darstellung eines weiteren bevorzugten Ausführungsbeispiels eines erfindungsgemäßen Systems;
- Fig. 7: eine schematische Darstellung eines weiteren bevorzugten Ausführungsbeispiels eines erfindungsgemäßen Systems;

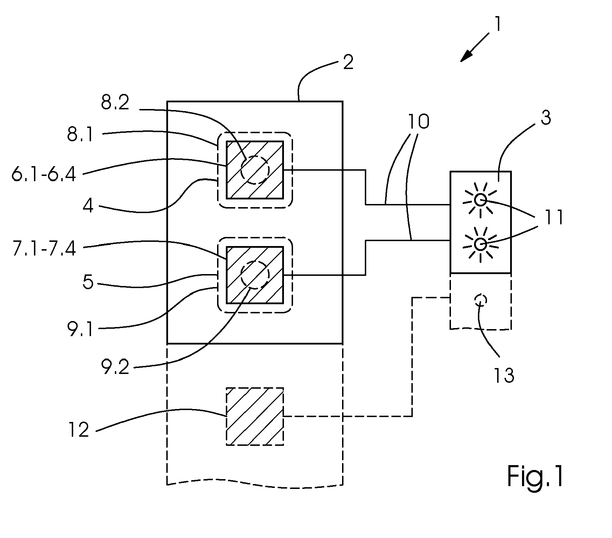

**Figur 1** zeigt ein erfindungsgemäßes System 1 mit einer Sensoreinrichtung 2, einer Auswerte-Einrichtung 3 und zwei zu bestimmenden Gegenständen 4 und 5 (bzw. 8.1 und 9.1).

An einer ersten Position 6.1 der Sensoreinrichtung befindet sich ein kapazitiver erster Sensor 6.2. Der erste Sensor umfasst eine elektrisch leitende erste Fläche 6.3. Der erste Sensor erfasst einen ersten Messbereich 6.4, wobei der erste Messbereich mit der ersten Fläche im Wesentlichen identisch oder auch größer sein kann. An einer zweiten Position 7.1 der Sensoreinrichtung befindet sich ein kapazitiver zweiter Sensor 7.2. Der zweite Sensor umfasst eine elektrisch leitende zweite Fläche 7.3. Der zweite Sensor erfasst einen zweiten Messbereich 7.4, wobei der zweite Messbereich mit der zweiten Fläche im Wesentlichen identisch oder auch größer sein kann. Die elektrisch leitenden Sensoren können auf einer elektrisch nicht leitenden bzw. dielektrischen Folie oder einem Papier oder einem Karton ausgebildet sein. Die elektrisch leitenden Sensoren bzw. deren Flächen können verdruckbares, elektrisch leitfähiges Material umfassen. Mit anderen Worten: die Sensoren können unter Einsatz von elektrisch leitfähigen Druckfarben (z.B. PEDOT, Polymere, Graphit, Kohlenstoffnanoröhren, Graphen, Silber oder Metallpigment enthaltende Farben) gedruckt sein. Alternativ können die Sensoren auch durch Folienübertrag erzeugt sein, z.B. unter Einsatz eines Kaltfolien-Transfermaterials. Andere bevorzugte Herstellverfahren sind: Folienkaschieren, Heißprägen, Thermotransfer, Vakuumabscheidung, Galvanikprozesse oder Beschichtungsprozesse (jeweils bevorzugt mit gleichzeitiger oder nachfolgender Strukturierung). Die Flächen können in oder auf der Folie angeordnet sein. Es können auch zusätzliche Schutzschichten (elektrische Isolation, Schmutz/Feuchtigkeit abweisende, Oxidation verhindernde Schicht) oder Schichten zur Verbergung der Markierungen vorgesehen sein.

Ein erster Gegenstand 8.1 umfasst eine elektrisch leitfähige erste Markierung 8.2. Die erste Markierung ist im ersten Messbereich 6.4 angeordnet, bzw. der erste Gegenstand 8.1 so auf der Sensoreinrichtung 2 platziert, dass die erste Markierung vom ersten Messbereich erfasst wird. Ein zweiter Gegenstand 9.1 umfasst eine elektrisch leitfähige zweite Markierung 9.2. Die zweite Markierung ist im zweiten Messbereich angeordnet, bzw. der zweite Gegenstand 9.1 so auf der Sensoreinrichtung 2 platziert, dass die zweite Markierung vom zweiten Messbereich erfasst wird. Die Gegenstände bzw. deren Markierungen können verdruckbares, elektrisch leitfähiges Material umfassen. Mit anderen Worten: die Markierungen können unter Einsatz von elektrisch leitfähigen Druckfarben (z.B. PEDOT, Polymere, Graphit, Kohlenstoffnanoröhren, Graphen, Silber oder Metallpigment enthaltende Farben) gedruckt sein. Alternativ können die Markierungen auch durch Folienübertrag erzeugt sein, z.B. unter Einsatz eines Kaltfolien-Transfermaterials. Andere bevorzugte Herstellverfahren sind: Folienkaschieren, Heißprägen, Thermotransfer, Vakuumabscheidung, Galvanikprozesse oder Beschichtungsprozesse (jeweils bevorzugt mit gleichzeitiger oder nachfolgender Strukturierung). Die Markierungen können in oder auf dem Gegenstand angeordnet sein. Der Gegenstand selbst oder ein Abschnitt des Gegenstands an dem die Markierung angebracht ist, ist bevorzugt nicht elektrisch leitend bzw. dielektrisch (bevorzugt Folie, Papier oder Karton). Der Abschnitt kann z.B. eine dielektrische Beschichtung des Gegenstands sein. Die Markierungen können an die Flächen der Sensoren, insbesondere hinsichtlich Größe, Abstand und Anzahl, angepasst sein oder umgekehrt.

Die Auswerte-Einrichtung 3 zum Auswerten von Signalen der Sensoren 6.2 und 7.2 ist mit den Sensoren über (ggf. elektrisch abgeschirmte) Signalleitungen 10 verbunden und weist eine Auswerte-Elektronik auf. Alternativ sind auch Funkverbindungen möglich. Die Auswerte-Einrichtung umfasst bevorzugt einen Signalgeber, einen Operationsverstärker und einen Mikroprozessor. Die Signalleitungen können über Steckverbindungen mit der Auswerte-Einrichtung gekoppelt werden. Die vom Signalgeber erzeugten Signale sind durch die elektrische Leitfähigkeit der Markierungen 8.2 und 9.2 der Gegenstände verändert. Die Anwesenheit der ersten Markierung 8.2 im ersten Messbereich 6.4 hat einen messbaren Einfluss auf die elektrische Kapazität des ersten Sensors 6.2. Die Taktung des Ausleseprozesses, d.h. die Erzeugung getakteter Spannungssignale, für das Signal kann an die Markierungen angepasst sein. Die Auswerte-Einrichtung registriert daher die Anwesenheit des ersten Gegenstandes. Entsprechendes gilt für die Anwesenheit des zweiten Gegenstandes. Die Markierungen sind in ihrer Wirkung im Wesentlichen identisch, d.h. sie rufen im Wesentlichen identische Signale hervor. Das Ergebnis der Auswertung ist: ein markierter Gegenstand befindet sich im Wesentlichen an der ersten Position 6.1 und ein markierter Gegenstand befindet sich im Wesentlichen an der zweiten Position 7.1. Das Ergebnis wird z.B. von zwei aktiven Leucht-Elementen 11 angezeigt. Auf diese Weise werden die Gegenstände lokalisiert und über zugleich über ihre jeweilige Markierung identifiziert, d.h. ein nicht markierter Gegenstand würde nicht lokalisiert und identifiziert werden.

In Figur 1 ist auch gezeigt, dass die Sensoreinrichtung 2 weitere Sensoren 12 umfassen kann, die ebenfalls mit der Auswerte-Einrichtung 3 verbunden sind. Nicht vorhandene Gegenstände werden durch inaktive weitere Leucht-Elemente 13 angezeigt.

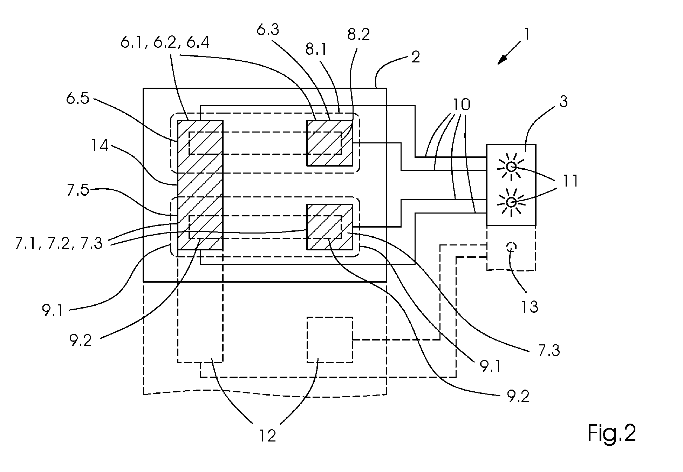

**Figur 2** zeigt ein weiteres erfindungsgemäßes System.

An einer ersten Position 6.1 der Sensoreinrichtung 2 befindet sich ein zweiteiliger, kapazitiver erster Sensor 6.2, mit einer Sende- und einer Empfangsfläche. Der erste Sensor umfasst eine elektrisch leitende erste Fläche 6.3 und einen ersten Abschnitt 6.5 einer elektrisch leitenden dritten Fläche 14. Der erste Sensor erfasst einen ersten Messbereich 6.4. An einer zweiten Position 7.1 der Sensoreinrichtung 2 befindet sich ein zweiteiliger, kapazitiver zweiter Sensor 7.2, mit einer Sende- und einer Empfangsfläche. Der zweite Sensor umfasst eine elektrisch leitende zweite Fläche 7.3 und einen zweiten Abschnitt 7.5 der elektrisch leitenden dritten Fläche 13. Der zweite Sensor erfasst einen zweiten Messbereich 7.4.

Ein erster Gegenstand 8.1 umfasst eine elektrisch leitfähige erste Markierung 8.2. Die erste Markierung ist im ersten Messbereich 6.4 angeordnet und überlappt dabei mit der ersten Fläche 6.3 und dem ersten Abschnitt 6.5 der dritten Fläche 14. Ein zweiter Gegenstand 9.1 umfasst eine elektrisch leitfähige zweite Markierung 9.2. Die zweite Markierung ist im zweiten Messbereich 7.4 angeordnet und überlappt dabei mit der zweiten Fläche 7.3 und dem zweiten Abschnitt 7.5 der dritten Fläche 14.

Das System weist eine Auswerte-Einrichtung 3 auf, die mit allen Sensoren über jeweilige Signalleitungen 10 verbunden ist. Das Ergebnis der Auswertung ist: ein markierter Gegenstand befindet sich im Wesentlichen an der ersten Position 6.1 und ein markierter Gegenstand befindet sich im Wesentlichen an der zweiten Position 7.1. Das Ergebnis wird z.B. von zwei aktiven Leucht-Elementen 11 angezeigt.

In Figur 2 ist auch gezeigt, dass die Sensoreinrichtung 2 weitere Sensoren 12 umfassen kann, die ebenfalls mit der Auswerte-Einrichtung 3 verbunden sind. Nicht vorhandene Gegenstände werden durch inaktive weitere Leucht-Elemente 13 angezeigt

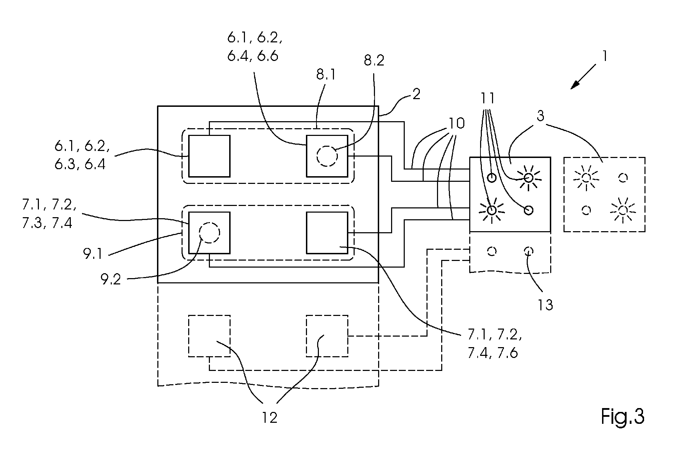

**Figur 3** zeigt ein weiteres erfindungsgemäßes System.

An einer ersten Position 6.1 der Sensoreinrichtung 2 befindet sich ein zweiteiliger, kapazitiver erster Sensor 6.2. Der erste Sensor umfasst eine elektrisch leitende erste Fläche 6.3 und eine davon separate, elektrisch leitende dritte Fläche 6.6. Der erste Sensor erfasst einen ersten Messbereich 6.4. An einer zweiten Position 7.1 der Sensoreinrichtung 2 befindet sich ein zweiteiliger, kapazitiver zweiter Sensor 7.2. Der zweite Sensor umfasst eine elektrisch leitende zweite Fläche 7.3 und eine davon separate, elektrisch leitende vierte Fläche 7.6. Der zweite Sensor erfasst einen zweiten Messbereich 7.4.

Ein erster Gegenstand 8.1 umfasst eine elektrisch leitfähige erste Markierung 8.2. Die erste Markierung ist im ersten Messbereich 6.4 angeordnet und überlappt mit der ersten Fläche 6.3. Ein zweiter Gegenstand 9.1 umfasst eine elektrisch leitfähige zweite Markierung 9.2. Die zweite Markierung ist im zweiten Messbereich 7.4 angeordnet und überlappt mit der vierten Fläche 7.6.

Das System weist eine Auswerte-Einrichtung 3 auf, die mit allen Sensoren über jeweilige Signalleitungen 10 verbunden ist. Die Anwesenheit der ersten Markierung 8.2 im ersten Messbereich 6.4, d.h. das Überlappen mit der ersten Fläche 6.3, hat einen messbaren Einfluss auf die elektrische Kapazität der ersten Fläche. Die Auswerte-Einrichtung registriert daher die Anwesenheit des markierten ersten Gegenstandes 8.1. Entsprechendes gilt für die Anwesenheit des markierten zweiten Gegenstandes 9.1. Der erste und der zweite Gegenstand unterscheiden sich dadurch, dass die erste Markierung am ersten Gegenstand an einer anderen Position vorgesehen ist, als die zweite Markierung am zweiten Gegenstand. Die Markierungen sind im Wesentlichen identisch. Die Gegenstände sind über die Position der jeweiligen Markierung identifizierbar. Das Ergebnis der Auswertung ist: ein markierter, erster Gegenstand befindet sich im Wesentlichen an der ersten Position 6.1 und ein markierter, zweiter Gegenstand befindet sich im Wesentlichen an der zweiten Position 7.1. Das Ergebnis wird von zwei leuchtenden Elementen angezeigt. Würden die beiden Gegenstände vertauscht, so würde von der Auswerteeinheit 3 das gestrichelt dargestellte Ergebnis angezeigt werden. Die Zeilen der Anzeige symbolisieren daher die Position des Gegenstandes und die Spalten seine Identität.

In Figur 3 ist auch gezeigt, dass die Sensoreinrichtung 2 weitere Sensoren 12 umfassen kann, die ebenfalls mit der Auswerte-Einrichtung 3 verbunden sind. Nicht vorhandene Gegenstände werden durch inaktive weitere Leucht-Elemente 13 angezeigt.

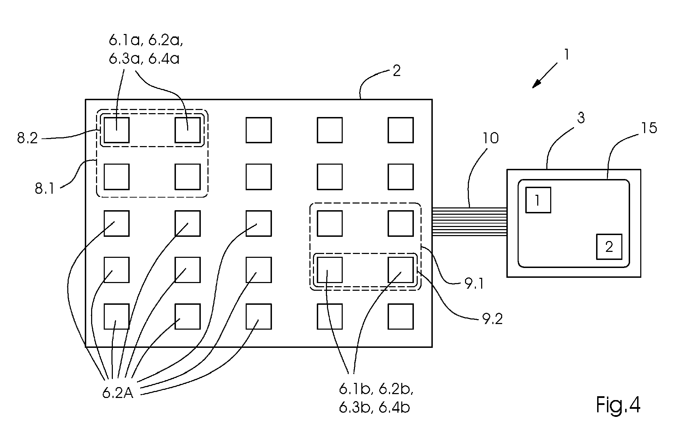

**Figur 4** zeigt ein weiteres erfindungsgemäßes System.

Die Sensoreinrichtung 2 umfasst eine Vielzahl von kapazitiven Sensoren 6.2a, 6.2b, etc. an verschiedenen Positionen 6.1a, 6.1b, etc. (bzw. ein zweidimensionales Sensor-Feld 6.2A). Jeder Sensor umfasst zwei elektrisch leitende Flächen 6.3a, 6.3b, etc. und erfasst einen ihm zugeordneten Messbereich 6.4a, 6.4b, etc. Ein erster Gegenstand 8.1 umfasst eine elektrisch leitfähige erste Markierung 8.2. Die erste Markierung ist in einem ersten Messbereich 6.4a angeordnet. Ein zweiter Gegenstand 9.1 umfasst eine elektrisch leitfähige zweite Markierung 9.2. Die zweite Markierung ist in einem zweiten Messbereich 6.4b angeordnet. Die zweite Markierung unterscheidet sich von der ersten Markierung durch ihre Position am Gegenstand. Die Gegenstände können nur in der gezeigten Orientierung auf der Sensoreinrichtung platziert werden. Die Gegenstände sind daher durch die Markierungen identifizierbar. Eine Auswerte-Einrichtung 3 zum Auswerten von Signalen der Sensoren ist mit den Sensoren über eine der Anzahl der Sensoren entsprechende Vielzahl von Signalleitungen 10 verbunden. Das Ergebnis der Auswertung ist: der erste Gegenstand befindet sich an der ersten Position und der zweite Gegenstand befindet sich an der zweiten Position. Das Ergebnis wird auf einer Anzeige 15, z.B. einem Monitor, grafisch angezeigt, wobei erkennbar ist, wo sich welcher Gegenstand auf der Sensoreinrichtung befindet.

Die Gegenstände 8.1 und 9.1 können auch mit elektrisch leitenden Barcodes ausgestattet sein, wobei die einzelnen Striche (wenigstens einer der jeweiligen Striche) der Barcodes als Markierungen 8.2 bzw. 9.2 eingesetzt werden. Die Barcode werden dann in zwei Funktionen verwendet: zu einem zum herkömmlichen optischen Abtasten und zu anderen zum erfindungsgemäßen kapazitiven Abtasten.

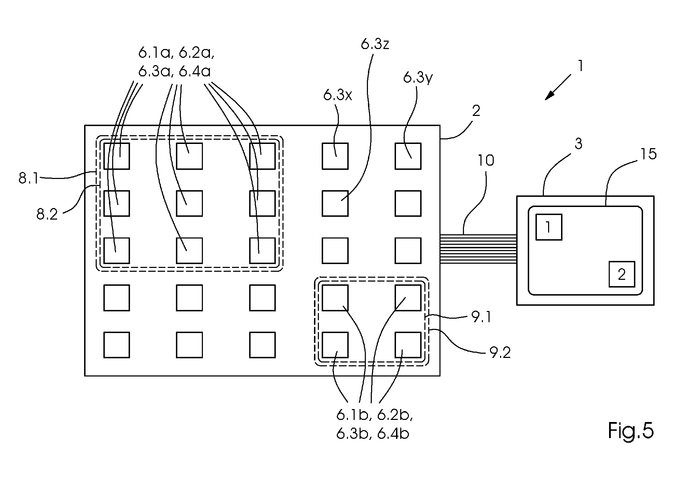

**Figur 5** zeigt ein weiteres erfindungsgemäßes System.

Die Sensoreinrichtung 2 umfasst ebenfalls eine Vielzahl von kapazitiven Sensoren 6.2a, 6.2b, etc. an verschiedenen Positionen 6.1a, 6.1b, etc. (bzw. ein zweidimensionales Sensor-Feld 6.2A). Jeder Sensor umfasst eine Mehrzahl elektrisch leitender Flächen 6.3a, 6.3b, etc. und erfasst einen ihm zugeordneten Messbereich 6.4a, 6.4b, etc. Ein erster Gegenstand 8.1 umfasst eine elektrisch leitfähige erste Markierung 8.2. Die erste Markierung ist in einem ersten Messbereich 6.4a angeordnet. Ein zweiter Gegenstand 9.1 umfasst eine elektrisch leitfähige zweite Markierung 9.2. Die zweite Markierung ist in einem zweiten Messbereich 6.4b angeordnet. Die zweite Markierung unterscheidet sich von der ersten Markierung durch ihre Form. Die erste Markierung überlappt mit einer Anzahl von Flächen und die zweite Markierung mit einer davon verschiedenen Anzahl von Flächen. Die Gegenstände sind daher durch die Markierungen identifizierbar. Eine Auswerte-Einrichtung 3 zum Auswerten von Signalen der Sensoren ist mit den Sensoren über eine Vielzahl von Signalleitungen 10 verbunden. Das Ergebnis der Auswertung ist: der erste Gegenstand befindet sich an der ersten Position und der zweite Gegenstand befindet sich an der zweiten Position. Das Ergebnis wird auf einer Anzeige 15 angezeigt, wobei erkennbar ist, wo sich welcher Gegenstand auf der Sensoreinrichtung befindet.

Bei dem in Figur 5 gezeigten Beispiel sind die Sensoren 6.2a, 6.2b, etc. jeweils von zwei oder mehr Flächen 6.3a, 6.3b, etc. gebildet. Dabei sind die Zuordnungen der Flächen zu den Sensoren nicht festgelegt, sondern ergeben sich aus der Art der Auswertung durch die Auswerte-Einrichtung 3. Die Fläche 6.3x kann in einem Schritt der Auswertung gemeinsam mit der Fläche 6.3y einen Sensor bilden und in einem anderen Schritt der Auswertung gemeinsam mit der Fläche 6.3z einen Sensor bilden. Die Fläche 6.3x wäre z.B. Sender und die beiden Flächen 6.3y und 6.3z jeweilige Empfänger. Die Auswertung kann insbesondere schrittweise wechselnde Flächenpaare oder Flächengruppen auf Vorhandensein und Identität eines Gegenstandes überprüfen. Bei derartiger Auswertung kann jede Fläche sowohl Sende- als auch Empfangsfläche sein. Es kann auch vorgesehen sein, feste oder wandernde Sender vorzusehen und diese mit einer Vielzahl von (mit wandernden) Empfänger zu umgeben.

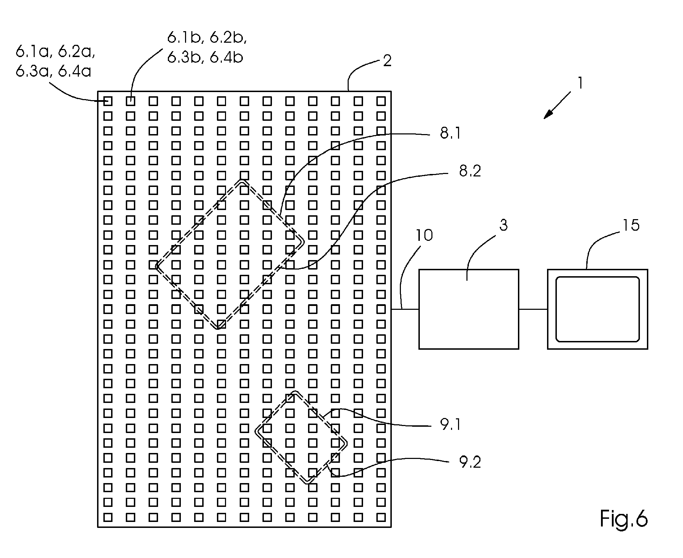

**Figur 6** zeigt ein weiteres erfindungsgemäßes System.

Die Sensoreinrichtung 2 umfasst ebenfalls eine Vielzahl von kapazitiven Sensoren 6.2a, 6.2b, etc. an verschiedenen Positionen 6.1a, 6.1b, etc. (bzw. ein zweidimensionales Sensor-Feld 6.2A). Jeder Sensor umfasst eine Mehrzahl elektrisch leitender Flächen 6.3a, 6.3b, etc. und erfasst einen ihm zugeordneten Messbereich 6.4a, 6.4b, etc. Ein erster Gegenstand 8.1 umfasst eine elektrisch leitfähige erste Markierung 8.2. Eine mit den Sensoren über Signalleitungen 10 verbundene Auswerte-Einrichtung 3 scannt das Sensor-Feld in X-Y-Richtung seriell (zeilen- und spaltenweise) ab und erfasst dabei durch die jeweiligen elektrisch leitfähigen Markierungen der variabel positionierbaren Gegenstände verursachte oder veränderte Sensor-Signale der kapazitiven Sensoren. Auf diese Weise werden die Positionen der Gegenstände erkannt. Über die Größe der Markierung oder eine andere Eigenschaft der Markierung, die auf die Kapazität des jeweiligen Sensoren eine Auswirkung hat (z.B. Anzahl, Abstand, Länge, Breite, Dicke, Material, 1D-, 2D- oder 3D-Struktur), werden die Gegenstände identifiziert. Das Ergebnis wird auf einer Anzeige 15 dargestellt. Alternativ sind auch zueinander versetzt angeordnete Sensoren möglich, z.B. wabenförmig angeordnete Sensoren. Das Sensorraster der Sensoreinrichtung kann so fein erzeugt sein, dass z.B. mit elektrisch leitender Farbe gedruckte Schriftzüge (bevorzugt Logos auf Verpackungen) ausgelesen werden können. In diesem Fall könnte auf zusätzliche Markierungen verzichtet werden.

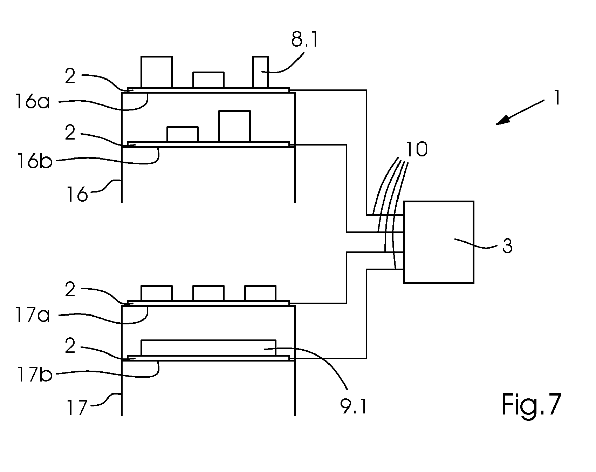

**Figur 7** zeigt ein weiteres erfindungsgemäßes System.

Das System 1 weist ein erstes Regal 16 für Gegenstände 8.1, 9.1 etc. mit wenigstens zwei übereinander angeordneten Böden 16a und 16b auf, wobei jeder Boden mit einer jeweiligen Sensoreinrichtung 2 versehen ist. Das System 1 weist ein zweites Regal 17 für Gegenstände 8.1, 9.1 etc. mit wenigstens zwei übereinander angeordneten Böden 17a und 17b auf, wobei jeder Boden mit einer jeweiligen Sensoreinrichtung 2 versehen ist. Es können auch weitere Regale und/oder weitere Böden vorgesehen sein. Das System weist bevorzugt eine Vielzahl solcher Regale auf und die Auswerte-Einrichtung 3 lokalisiert und identifiziert Gegenstände auf wenigstens zwei Böden verschiedener Regale im Wesentlichen gleichzeitig. Die Sensoreinrichtungen können auch direkt in die Böden, z.B. aus nicht leitendem Kunststoff oder mit entsprechender Beschichtung, integriert werden.

Die Gegenstände weisen im Wesentlichen ebene Böden aus Karton oder Pappe (alternativ: Folie) auf und die Markierungen sind auf den Böden aufgedruckt oder durch Folienübertrag erzeugt. Als Druckverfahren kommen Offsetdruck, Flexodruck, Tiefdruck, Inkjet, Tonerdruck und Siebdruck in Frage. Diese Art der Herstellung ist inline während des Bedruckens der Gegenstände möglich und daher zeit - und kostensparend. Bei den Gegenständen kann es sich bevorzugt um Verpackungen handeln. Eine auf die jeweiligen Verpackungen bzw. deren Markierungen abgestimmte Sensoreinrichtung kann bis zum Einsatz in der Umverpackung der Verpackungen aufbewahrt sein. Alternativ kann die Sensoreinrichtung in die Umverpackung integriert sein. Die Auswerte-Einrichtung müsste dann nur noch mit der Umverpackung gekoppelt werden. Das System ist demnach bei der Lagerhaltung oder auch in Verkaufsräumen als intelligentes Regalsystem einsetzbar, das jederzeit Informationen über Position und Identität der eingelagerten Gegenstände ermitteln, verarbeiten und ausgeben kann. Es kann auch geprüft oder überwacht werden, wann ein bestimmter Gegenstand aus dem Regal entnommen wird. Diese Funktion könnte im Zusammenhang von Diebstahlschutz oder Bezahlsystemen Verwendung finden. Es kann auch vorgesehen sein, aufgrund der gewonnen Informationen Gegenstände zu zählen, zu verschieben, zu entnehmen, zu positionieren oder Fehlpositionen zu erkennen und vor Fehlpositionierung zu warnen. Eine weitere interessante Anwendung ist das Auffinden von fehlpositionierten Büchern in Bibliotheken.

Über die Codierung der Gegenstände vermittels der Markierungen ist es auch möglich, die Gegenstände nur in bestimmten Regalen als "richtig" zu erkennen und vom Gegenstand abhängige Funktionen direkt am Regal oder in seiner Nähe zu steuern, wie z.B. Werbeanzeigen, Lichteffekte, Gewinnspiele, Produktinformationen.

Bei hängenden Gegenständen können die Markierungen an den Aufhängern und die Sensoren an den Hängeschienen angebracht sein. Bei gestapelten Gegenständen können die Markierungen an den Seiten der Gegenstände und die Sensoren an den Seiten der Regale angebracht sein. Die Gegenstände können auch in Vertiefungen der Sensoreinrichtung aufgenommen sein, wobei die Vertiefungen an ihrem Boden und/oder an ihren Seiten mit Sensoren bestückt sind.

### Bezugszeichenliste

- 1: System
- 2: Sensoreinrichtung
- 3: Auswerteeinrichtung
- 4, 5: Gegenstände
- 6.1: erste Position
- 6.1a, 6.1b, etc.: Positionen
- 6.2: erster Sensor
- 6.2a, 6.2b, etc.: Sensoren
- 6.2A: Sensorfeld
- 6.3: erste Fläche
- 6.3a, 6.3b, etc.: Flächen
- 6.3x, 6.3y, 6.3z: Flächen
- 6.4: erster Messbereich
- 6.4a, 6.4b, etc.: Messbereich
- 6.5: erster Abschnitt einer Fläche
- 6.6: dritte Fläche
- 7.1: zweite Position
- 7.2: zweiter Sensor
- 7.3: zweite Fläche
- 7.4: zweiter Messbereich
- 7.5: zweiter Abschnitt einer Fläche
- 7.6: vierte Fläche
- 8.1: erster Gegenstand
- 8.2: erste Markierung
- 9.1: zweiter Gegenstand
- 9.2: zweite Markierung
- 10: Signalleitungen
- 11: Leucht-Elemente
- 12: weitere Sensoren
- 13: weitere Leucht-Elemente
- 14: dritte Fläche
- 15: Anzeige
- 16: erstes Regal
- 16a, 16b, etc.: Regalböden
- 17: zweites Regal
- 17a, 17b, etc.: Regalböden

## Patentansprüche

1. System zum Lokalisieren und Identifizieren von wenigstens zwei separaten Gegenständen, wobei das System Folgendes umfasst:
- wenigstens ein - einen ersten Mess-Bereich (6.4, 6.4a) erfassenden - kapazitiver erster Sensor (6.2, 6.2a) an einer ersten Position (6.1, 6.1a) einer Sensoreinrichtung (2),
- wenigstens ein - einen zweiten Mess-Bereich (7.4, 6.4b) erfassenden - kapazitiver zweiter Sensor (7.2, 6.2b) an einer von der ersten verschiedenen zweiten Position (7.1, 6.1b) der Sensoreinrichtung (2),
- wenigstens eine elektrisch leitfähige erste Markierung (8.2) eines ersten Gegenstands (8.1) im Mess-Bereich des einen Sensors,
- wenigstens eine elektrisch leitfähige zweite Markierung (9.2) eines zweiten Gegenstands (9.1) im Mess-Bereich des anderen Sensors, und
- eine Auswerte-Einrichtung (3) zum Auswerten von - durch die elektrische Leitfähigkeit der Markierungen der Gegenstände verursachte oder veränderte - Signalen der Sensoren.

2. System nach Anspruch 1,
**dadurch gekennzeichnet,**
**dass** der erste Sensor und der zweite Sensor als elektrisch leitende Flächen (6.3, 6.3a, 6.3b) ausgebildet sind.

3. System nach Anspruch 1,
**dadurch gekennzeichnet,**
**dass** die erste Markierung und die zweite Markierung als elektrisch leitende Flächen ausgebildet sind.

4. System nach Anspruch 1,
**dadurch gekennzeichnet,**
**dass** die Sensoreinrichtung eine zweidimensionale Anordnung von Sensoren (6.2A) umfasst.

5. System nach Anspruch 1,
**dadurch gekennzeichnet,**
**dass** die Markierungen verdruckbares, elektrisch leitfähiges Material umfassen.

6. System nach Anspruch 1,
**dadurch gekennzeichnet,**
**dass** die Gegenstände im Wesentlichen ebene Böden aus Karton oder Pappe aufweisen und dass die Markierungen auf den Böden aufgedruckt oder durch Folienübertrag erzeugt sind.

7. System nach Anspruch 2,
**dadurch gekennzeichnet,**
**dass** die Flächen verdruckbares, elektrisch leitfähiges Material umfassen.

8. System nach Anspruch 2,
**dadurch gekennzeichnet,**
**dass** die Sensoreinrichtung eine elektrisch nicht leitende Folie aufweist und dass die Flächen auf die Folie aufgedruckt oder durch Folienübertrag erzeugt sind.

9. System nach Anspruch 1,
**dadurch gekennzeichnet,**
**dass** das System ein Regal für die Gegenstände mit wenigstens zwei übereinander angeordneten Böden aufweist, wobei jeder Boden mit einer jeweiligen Sensoreinrichtung versehen ist.

10. System nach Anspruch 9,
**dadurch gekennzeichnet,**
**dass** das System eine Vielzahl solcher Regale aufweist und dass die Auswerte-Einrichtung Gegenstände auf wenigstens zwei Böden verschiedener Regale im Wesentlichen gleichzeitig lokalisiert und identifiziert.
